# EUROPEAN PATENT APPLICATION

(11) **EP 2 711 848 A2**
(43) Date of publication of application: **26.03.2014**
(21) Application number: 13178692.3
(22) Date of filing: 31.07.2013
(51) Int. Cl.: G06F 17/24

(54) **System and method for creating e-book including user effects**

(30) Priority: 19.09.2012 KR 20120103797
(71) Applicant: Samsung Electronics Co., Ltd, Gyeonggi-do 443-742 (KR)
(72) Inventor: Heo, Dongkyu, 443-742 Gyeonggi-do (KR)
(74) Representative: Gover, Richard Paul

(57) **Abstract**

A system and a method that allow a user to input user effects to an e-book and plays back them, in order, according to a user's set output order are provided. The e-book creating method includes receiving, if an input is detected to select one of items of content in the e-book, one or more user effects for the selected item of content, creating metadata including information regarding the user effects for the selected item of content, and storing the metadata associated with the file of the e-book.

## Description

### BACKGROUND OF THE INVENTION

### 1. Field of the Invention:

The present invention relates to a system and method that allows a user to input user effects to an e-book and plays them back, in order, according to a user's set output order.

### 2. Description of the Related Art:

In recent years, e-books have been produced in such a way that animation effects are inserted into the content using a Text To Speech (TTS) technology during the production process. When users read such e-books containing animation effects, they may feel an interaction with the e-books via the animation effects. Therefore, users can take a greater interest in reading e-books containing animation effects than other books that lack animation effects.

However, e-books of the related art can only provide a series of effects inserted into the content of e-books according to the authors' purposes. That is, e-books of the related art do not allow for the insertion of animation effects according to a user's requests.

Although e-books of the related art are developed to contain a variety of content, they do not provide interaction effects and this does not direct the interest of users to the e-books. Accordingly, there is a need for a system and method that enables users to insert user effects to e-books, thereby creating e-books containing the user effects.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a system and method that enables users to insert user effects to e-books, thereby creating e-books containing the user effects.

Another aspect of the present invention is to provide a system and method that can play back user effects, inserted into an e-book, in order of a user's selection, in order of insertion of user effects, or in order of location of content in an e-book.

In accordance with an aspect of the present invention, a method for creating an e-book is provided. The method includes receiving, if an input is detected to select content in the e-book, one or more user effects for the selected content, creating metadata including information regarding the user effects for the selected content, storing the metadata associated with the file of the e-book, and playing back, if an input is detected to play back the user effects, the user effects according to at least one of the output order of the content, structural information of the e-book, the order of user effects added to the content, the output order of the user effects, and the playback order of the user effects set by a user.

In accordance with another aspect of the invention, a system for creating an e-book is provided. The system includes an input unit for detecting a user's input, a storage unit for storing one or more e-books, a display unit for displaying one or more e-books, and a controller configured to detect an input for selecting at least one content in the e-book via the input unit, to control the input unit to receive one or more user effects for the selected content, to create metadata including information regarding the user effects for the selected item of content, and to store the metadata associated with the file of the e-book in the storage input, wherein the controller detects an input for playing back the user effects via the input unit, and plays back the user effects according to at least one of the output order of the content, structural information of the e-book, the order of user effects added to the item of content, and the output order of the user effects.

In accordance with yet another aspect of the present invention, a method for creating an e-book is provided. The method includes receiving, if an input is detected to select at least one content in the e-book, one or more user effects for the selected content, receiving a playback order of the user effects, creating metadata including information regarding the user effects for the selected content, arranging the metadata for the user effects according to the playback order of user effects, and storing the metadata associated with the e-book.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a schematic block diagram showing an e-book creating system according to an exemplary embodiment of the present invention;

FIG. 2 illustrates a flowchart describing an e-book creating system according to an exemplary embodiment of the present invention;

FIG. 3 illustrates a screen describing a process for selecting content in an e-book by a touch action according to an exemplary embodiment of the present invention;

FIG. 4 illustrates a screen showing a content input to provide a user effect according to an exemplary embodiment of the present invention;

FIG. 5 illustrates a screen showing a text, a handwriting comment, and a highlight input to provide user effects according to an exemplary embodiment of the present invention;

FIG. 6 illustrates a structure of metadata for an e-book according to an exemplary embodiment of the present invention; and

FIG. 7 illustrates a structure of metadata for a user effect according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the invention relate to a system and method for creating e-books and for editing e-books.

It will be appreciated that exemplary embodiments of the invention can be applied to any information communication device, multimedia device, and their applications, when they are equipped with an e-book service function. For example, smart phones, portable terminals, mobile communication terminals, Personal Digital Assistants (PDAs), Portable Multimedia Players (PMPs) with an e-book creating function, computers, laptop computers, note pad devices, Wibro terminals with an e-book creating function, tablet PCs, smart TVs, smart refrigerators, etc.

The terms or words described in the present description and the claims should not be construed as limited by a general or lexical meaning, but instead should be analyzed as having a meaning and a concept through which the inventor defines and describes the invention to the best of his/her ability, to comply with the idea of the invention. Therefore, one skilled in the art will understand that the embodiments disclosed in the description and configurations illustrated in the drawings are only exemplary embodiments, and that there may be various modifications, alterations, and equivalents thereof to replace the embodiments at the time of filing this application.

As used herein, the singular forms "a," "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Hereinafter, exemplary embodiments of the invention are described with reference to the accompanying drawings.

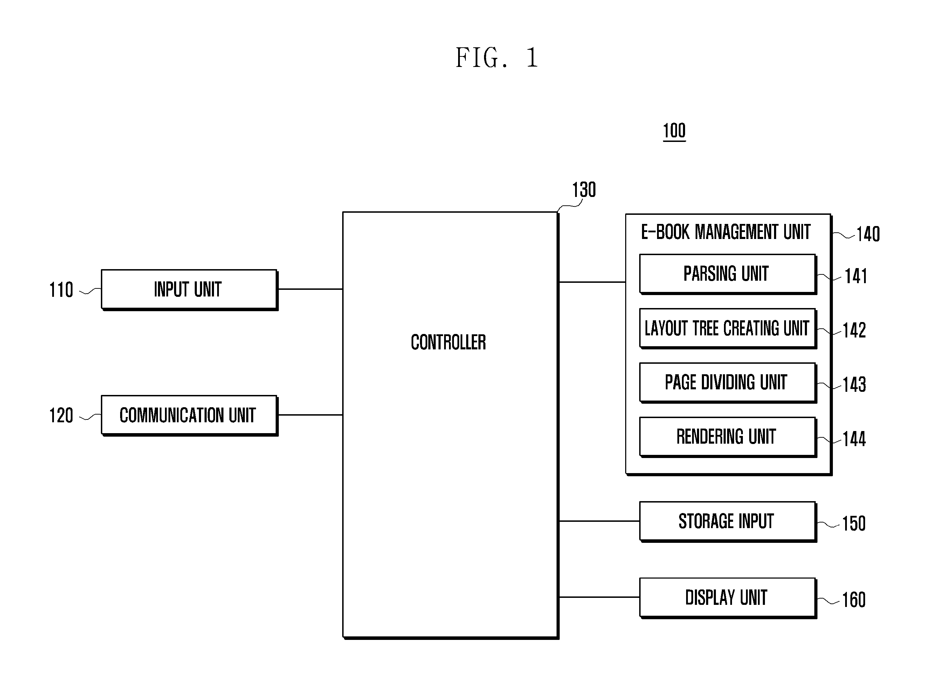

FIG. 1 illustrates a schematic block diagram showing an e-book creating system according to an exemplary embodiment of the present invention.

Referring to FIG. 1, the e-book creating system 100 includes an input unit 110, a communication unit 120, a controller 130, an e-book management unit 140, a storage input 150 and a display unit 160.

The input unit 110 may create operation signals according to a user's input. The input unit 110 may be implemented with a keypad, a dome switch, a jog wheel, a jog switch, etc. The input unit 110 may also be implemented with a touch sensor, a pressure sensor, a proximity sensor, an electromagnetic sensor, etc. Alternatively, the input unit 110 may also be implemented with various types of pads, e.g., a touch pad of resistive/capacitive type, an Electro Magnetic Resonance (EMR) pad, an Electro Magnetic Interface (EMI) pad, etc. The input unit 110 senses, via one or more sensors, a user's input using a variety of objects, such as the user's body (e.g., hand), a physical tool (e.g., a stylus pen), etc. The input unit 110 may be configured with a number of pads that are multi-layered.

The input unit 110 and the display unit 160 may be configured in a layered structure, i.e., a touch screen. For example, the input unit 110 may be implemented with an input pad with touch sensors, and this may be coupled with the display unit 160, thereby forming a Touch Screen Panel (TSP).

In an exemplary embodiment of the present invention, the input unit 110 detects inputs for selecting content in the e-book and for adding a user effect thereto. The input unit 110 may also receive one or more contents for user effects.

The input unit 110 may detect an input for playing back a user effect.

The communication unit 120 performs data communication with external systems, in a wired mode or a wireless mode such as Radio Frequency (RF) communication or short-range communication. RF communication may be by Wireless Local Area Network (WLAN), Wi-Fi, Wireless broadband (Wibro), World Interoperability for Microwave Access (Wimax), High Speed Downlink Packet Access (HSDPA), etc. Short-range RF communication may be by Bluetooth, Radio Frequency Identification (RFID), Infrared Data Association (IrDA), Ultra Wideband (UWB), Zigbee, etc. Wired short range communication may be by Universal Serial Bus (USB), IEEE 1394, Thunderbolt^{™} of Intel, etc. To this end, the communication unit 120 may include one or more communication modules for Bluetooth, Zigbee, UWB, Wireless USB, Near Field Communication (NFC), Wireless LAN, etc.

The communication unit 120 downloads one or more e-books. The communication unit 120 may also download e-book files including metadata of e-books.

The controller 130 controls operations of the e-book creating system 100, by controlling the components therein. For example, the controller 130 controls the components of the system 100 to add user effects to e-books and to play them back in order.

If the controller 130 detects an input for selection of at least one content via the input unit 110, it receives one or more user effects for the content and creates metadata including information regarding the user effects. The controller 130 controls the storage input 150 to store the created metadata associated with the e-book file, and also controls the display unit 160 to play back and display the user effect based on the metadata.

The controller 130 controls the input unit 110 to receive the playback order of user effects. If the controller 130 detects an input for playing back user effects via the input unit 110, it plays back user effects, based on the metadata arranged, according to the playback order of user effects.

A more detailed operation of the controller 130 will be described later referring to the accompanying drawings.

The e-book management unit 140 includes a parsing unit 141, a layout tree creating unit 142, a page dividing unit 143, and a rendering unit 144. The parsing unit 141 parses the contents of e-books. The layout tree creating unit 142 creates a layout tree using the parsed data. The page dividing unit 143 creates page division information from the created layout tree, to meet the font information and the size of display unit 160. The rendering unit 144 transfers one of the created layout trees corresponding to the current page to the controller 130, using the page division information, thereby displaying it on the display unit 160 under the control of the controller 130.

The storage input 150 stores commands or programs related to the operations of the e-book creating system 100. The controller 130 executes the commands and programs stored in the storage unit 150.

The storage unit 150 may be implemented with a flash memory type, a hard disk type, a multimedia card micro type, a card type of memory (e.g., SD, XD, etc.), a Random Access Memory (RAM), a Static Random Access Memory (SRAM), a Read-Only Memory (ROM), an Electrically Erase Programmable Read-Only Memory (EEPROM), a Programmable Read-Only Memory (PROM), a magnetic memory, a magnetic disk, an optical disk, etc.

In an exemplary embodiment of the present invention, the storage unit 150 stores one or more e-books. The storage unit 150 also stores e-book files including metadata regarding one or more e-books.

The storage input 150 stores one or more user effects for the content included in e-books. The storage input 150 stores metadata of user effects, including the output order of user effects.

The display unit 160 displays information processed in the e-book creating system 100. For example, the display unit 160 displays a User Interface (UI) or a Graphic User Interface (GUI) related to e-books.

The display unit 160 may be implemented with a flat display panel, such as a Liquid Crystal Display (LCD), a Thin Film Transistor-Liquid Crystal Display (TFT LCD), Organic Light Emitting Diodes (OLEDs), a flexible display, a three-dimensional (3D) display, or the like.

The display unit 160 may be configured with the electromagnetic sensors and/or touch sensors of the input unit 110, thereby serving as a touch screen. In that case, the display unit 160 also serves to perform the functions of the input device.

The display unit 160 can display an e-book under the control of the controller 130. The display unit 160 can also play back and display user effects according to a user's request.

It should be understood that the e-book creating system 100 shown in FIG. 1 may further include other components or remove part of them, according to the functions.

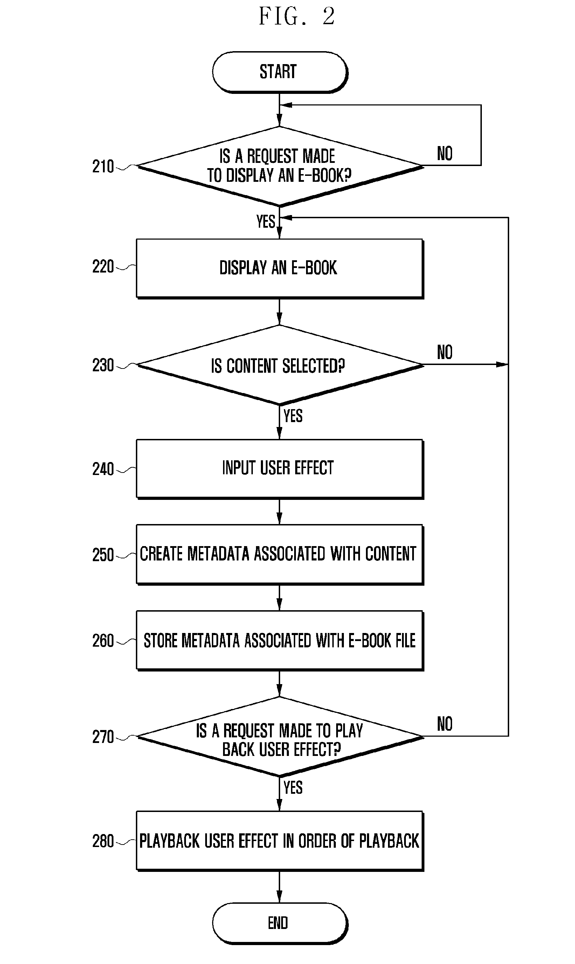

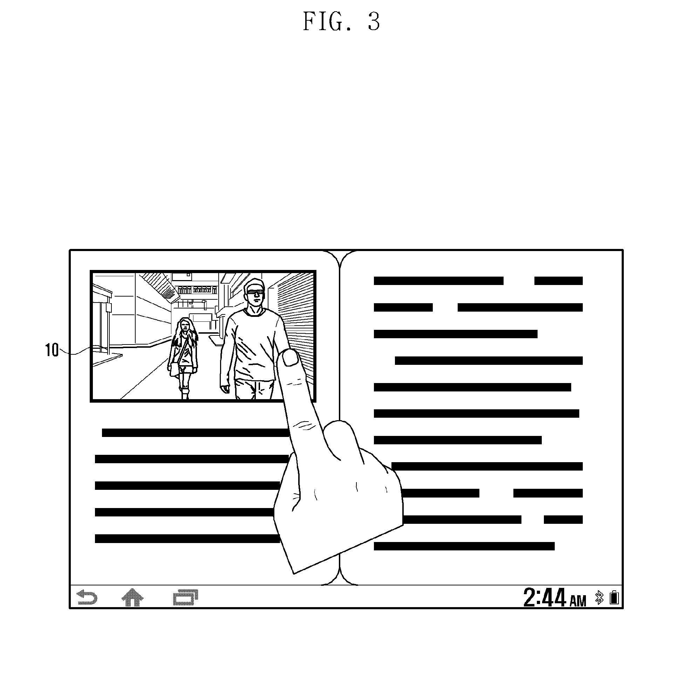

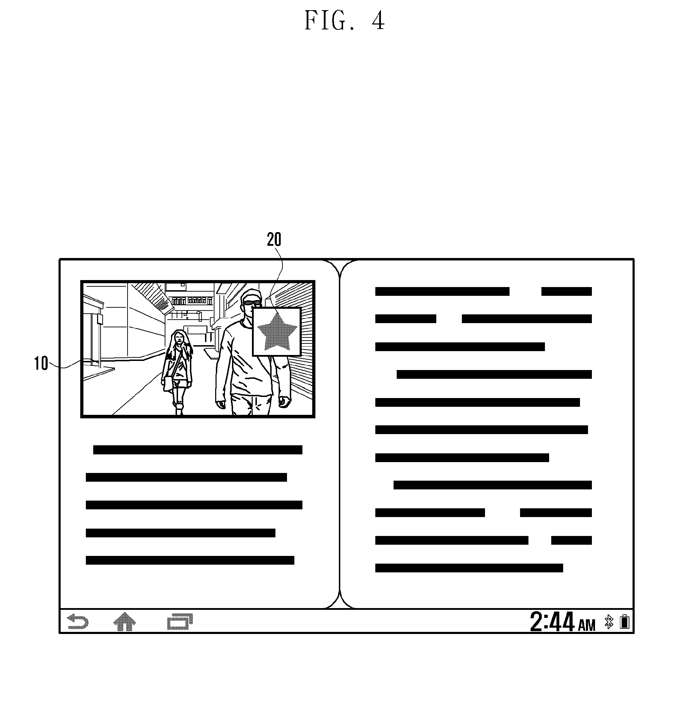

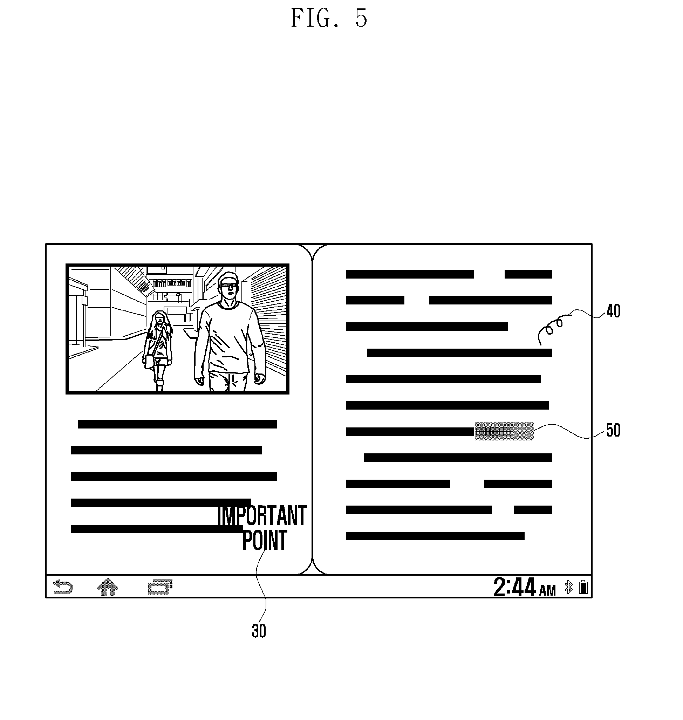

FIG. 2 illustrates a flowchart describing an e-book creating system according to an exemplary embodiment of the present invention. FIG. 3 illustrates a screen describing a process for selecting content in an e-book by a touch action according to an exemplary embodiment of the present invention. FIG. 4 illustrates a screen showing a content input to provide a user effect according to an exemplary embodiment of the present invention. FIG. 5 illustrates a screen showing a text, a handwriting comment, and a highlight input to provide user effects according to an exemplary embodiment of the present invention.

Referring to FIG. 2, the controller 130 determines whether a request is made to display an e-book in step 210.

In an exemplary implementation, the controller 130 detects whether a signal for requesting the display of an e-book is received via the input unit 110. For example, a request for the display of an e-book may be made according to a user's input or by executing an application, a program, a service, or the like, related to the display of an e-book.

If the controller 130 ascertains that a request has been made to display an e-book at step 210, it controls the display unit 160 to display the e-book in step 220.

An e-book may include one or more contents, e.g., text, images, motion pictures, flash images, audio data, etc. E-books may have been stored in the storage input 150. Alternatively, e-books may be downloaded via the communication unit 120 according to a user's request or a corresponding event, under the control of the controller 130. E-books may be published in PDF or ePUB format.

In order to display an e-book on the display unit 160, the controller 130 transfers a control signal for displaying it to the e-book management unit 140. The e-book management unit 140 loads the e-book file from the storage input 150 according to the control signal. The e-book management unit 140 parses the content of the e-book corresponding to the loaded e-book file. The e-book management unit 140 creates a layout tree for the parsed content, and also page division information regarding the layout tree based on the font information and the size of the display unit 160. The e-book management unit 140 transfers, to the controller 130, the layout information regarding the content to be displayed on the current page, based on the created layout tree and the created page division information. The controller 130 controls the display unit 160 to display the content of the e-book according to the received layout information.

The display unit 160 displays one or more contents forming the e-book on a preset layout in a format, under the control of the controller 130, so that the user can read it.

After displaying the e-book at step 220, the controller 130 determines whether the at least one content is selected in step 230.

The input unit 110 detects a touch action or a proximity action to the at least one content, and creates the input signal for selecting the content. The input signal includes information regarding the selected content. For example, as shown in FIG. 3, if a user applies a touch action to an image 10, as a content in the e-book, the input unit 110 detects it and creates an input signal. The input signal includes an identifier for the image 10 (including the name of the content, the serial number of the content, the size of the content, etc.), the structure information, etc.

The controller 130 determines whether to receive an input signal for selecting one of the contents configuring the e-book from the input unit 110. If the controller 130 receives the input signal from the input unit 110, it acquires information regarding the selected content, based on the received input signal.

If the controller 130 ascertains that the at least one content is selected at step 230, it receives a user effect in step 240.

The controller 130 may execute a mode where the user inputs user effects, according to which type of content is selected.

The controller 130 controls the display unit 160 to display a UI or a GUI related to user effects, e.g., a content input tool, a text or handwriting recognition tool, an animation effect input tool, etc.

The controller 130 detects an additional input of a user effect via the UI or GUI. For example, the controller 130 may detect an action for inputting/selecting content for a user effect, an action for inputting text, a handwriting action, an action for inputting an animation effect of the content for a user effect of the content configuring an e-book, etc.

The controller 130 receives one or more contents to be added to the e-book for user effects according to a user's actions. Referring to FIG. 4, in addition to receiving an image 10 as the content configuring an e-book, the controller 130 may further receive an extra content 20 for a user effect.

The controller 130 may further receive a word of text, a handwriting comment or a highlight. For example, referring to FIG. 5, the controller 130 may detect an action for inputting a word of text 30 or a handwriting comment 40 corresponding to locations on the pages of the e-book or an action for inputting a highlight 50 regarding the content in the e-book.

In an exemplary embodiment of the present invention, the controller 130 receives a playback order of user effects. The controller 130 may receive the playback order of one or more user effects for one or more contents. A user effect may be played back twice according to the order of playback that the user inputs. If a playback order for user effects has not been input to the controller 130, the controller 130 may set it according to the order of the content for user effects located in the e-book or according to the input order of the user effects.

User effects refer to contents configuring an e-book or a user's additionally input contents. User effects may further include an operation for playing back video or audio data, an operation for displaying images, and an operation for applying a 3-dimensional effect to an e-book and displaying it. In addition, user effects may include operations for displaying text, handwritten comments, or highlights, which have been input to an e-book during the manufacture or that the user has input in an e-book. With respect to content configuring an e-book, a number of user effects may be input to the e-book.

After inputting user effects at step 240, the controller 130 creates metadata including information regarding the user effects associated with the content in step 250. The storage input 150 stores the metadata for an e-book in a table.

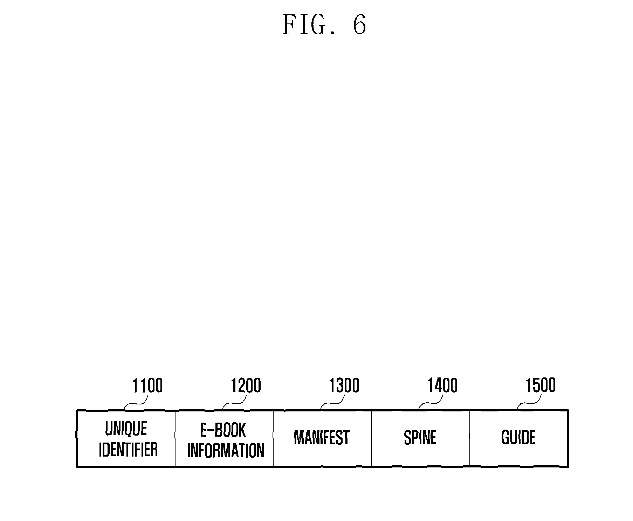

FIG. 6 illustrates a structure of metadata for an e-book according to an exemplary embodiment of the present invention.

Referring to FIG. 6, the metadata for the e-book includes a unique identifier 1100, e-book information 1200, a manifest 1300, a spine 1400 and a guide 1500. Unique identifier 1100 refers to information to identify e-books, i.e., ID. E-book information 1200 includes a download path of an e-book, a title, language information, information regarding an author, a version, etc. Manifest 1300 refers to a list of contents configuring an e-book, e.g., content name, format, etc. Manifest 1300 may include fallback information regarding the content to assist a reading system that cannot process the format of the content. Spine 1400 refers to the output order of respective contents or sets of content from the contents in the manifest 1300. Guide 1500 refers to logical guide information containing the content of an e-book. The guide information includes components of an e-book, such as a cover, a title, contents, indexes, references, explanatory notes, etc., and index information describing locations of contents in the e-book.

The controller 130 creates metadata including information regarding user effects. The controller 130 creates metadata for user effects and inserts it into metadata for e-books. For example, as shown in FIG. 4, if an additional content 20 is input to provide a user effect for the content 10 in the e-book and the playback order of the content 20 is input, the controller 130 creates information regarding the content 20, associated with the content 10, in the manifest 1300 of metadata for the e-book. In addition, the controller 130 also creates information regarding the playback order of the content 20 input to the spine 1400 of metadata for the e-book or information regarding the location in the guide 1500 where the content 20 is input.

If alteration or access to the metadata of the e-book is not allowed, the controller 130 may create separate metadata associated with the content in the metadata of the e-book.

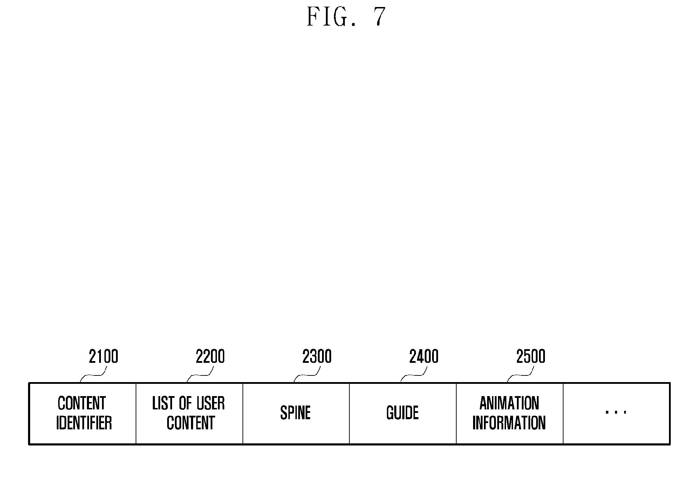

FIG. 7 illustrates a structure of metadata for a user effect according to an exemplary embodiment of the present invention.

Referring to FIG. 7, the controller 130 creates metadata of user effects including a content identifier 2100, a list of user content 2200, a spine 2300, a guide 2400, and animation information 2500. Content identifier 2100 refers to information regarding contents in the e-book with user effects. List of user content 2200 refers to a list of additional contents for the user effects. If content is additionally input in order to provide a user effect, the controller 130 extracts information of the content to be added to the e-book. For example, the controller 130 may extract a filename, a storage path, a format information, etc. In addition, the controller 130 may create the list of user content 2200 based on the extracted information. Spine 2300 refers to information regarding the playback order of user effects if it was input. The controller 130 may arrange contents in the list 2200, according to the output order in the spine 2300. Guide 2400 refers to guide information regarding input content for user effects, and may include index information regarding the contents in the e-book. Animation information 2500 includes information regarding an animation effect if the animation effect is included in a user effect. Examples of an animation effect are a sliding motion, a pop-up motion, a rotation motion, etc.

Referring again to FIG. 2, after creating the metadata at step, 250, the controller 130 stores it associated with an e-book file in step 260.

If a user creates metadata of an e-book by directly inputting metadata of a user effect to the e-book, the controller 130 can store it. In that case, the metadata of an e-book where a user's written data is input may be included in the e-book file.

If metadata of a user effect is separately created, the controller 130 stores it associated with the e-book file. The controller 130 may store metadata for an e-book or metadata for a user effect associated with the content in the metadata.

The controller 130 performs a process for displaying an e-book based on the stored metadata, so that the user can read the e-book with the added user effect.

The e-book creating method according to exemplary embodiments of the invention can create a variety of user effects associated with the e-book, thereby effectively stimulating the user's interest for an e-book and enhancing the e-book service.

After storing the metadata at step 260, the controller 130 determines whether a request is made to play back user effects in step 270.

The controller 130 detects whether a request for playing back user effects is input via the input unit 110. The input for playing back user effects may be achieved by a touch action or a proximity action to the content with an added user effect.

If the controller 130 ascertains that a request has been made to play back user effects at step 270, the controller 130 plays back user effects according to the playback order in step 280.

If an input is made to play back user effects, the controller 130 searches metadata of the user effects. The controller 130 searches metadata for information regarding the content corresponding to the user effect. If the controller 130 has detected the information regarding the content corresponding to the user effect, it acquires information regarding the user effect associated with the information regarding the content. The controller 130 plays back one or more user effects, in order, based on the output order of user effects.

The playback order of user effects may be set via a user's input or an initial value set by the controller 130. The playback order of user effects according to an initial value set to the controller 130 may be an order of locations where the contents for user effects are located in the e-book or an input order of user effects.

As described above, the system and method for creating e-books containing user effects, according to exemplary embodiments of the invention, allows users to freely insert effects into e-books, thereby creating e-books with a highly enhanced, interaction effect.

The system and method for creating e-books containing user effects, according to exemplary embodiments of the invention, plays back effects, inserted into e-books, according to a user's selected scenario, thereby effectively stimulating the user's interest and encouraging the user to read the e-book.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a non-transitory machine-readable storage storing such a program.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A method for creating an e-book, the method comprising:
receiving, if an input is detected to select at least one content in the e-book, one or more user effects for the selected content;
creating metadata including information regarding the user effects for the selected content;
storing the metadata associated with the e-book; and
playing back, if an input is detected to play back the user effects, the user effects according to at least one of the output order of the content, structural information of the e-book, the order of user effects added to the content, the output order of the user effects, and the playback order of the user effects set by a user.

2. The method of claim 1, wherein the user effects comprises at least one of a media file play back effect, an image display effect, a 3-dimension display effect, a text, a handwriting comment, and a highlight effect.

3. The method of claim 1, wherein the receiving of the one or more user effect comprises:
receiving one or more content to be added to the e-book for the user effects; and
wherein the creating of the metadata comprises:
extracting information regarding the user effects that includes information regarding the one or more content to be added to the e-book;
creating the metadata based on the information regarding the user effects; and
storing the one or more content to be added to the e-book of content and the metadata.

4. The method of claim 1, wherein the receiving of the one or more user effects comprises:
inputting the playback order of the user effects; and
wherein the creating of the metadata comprises arranging the metadata for the user effects according to the playback order of the user effects.

5. The method of claim 4, further comprising:
playing back, if an input for playing back the user effects is detected, the user effects, in order, based on the metadata arranged according to the playback order of the user effects.

6. The method of claim 4, wherein the input for playing back user effects is executed by a touch action or a proximity action to the content.

7. A system for creating an e-book, the system comprising:
an input unit for detecting a user's input;
a storage unit for storing one or more e-books;
a display unit for displaying the one or more e-books; and
a controller configured to detect an input for selecting at least one content in the e-book via the input unit, to control the input unit to receive one or more user effects for the selected content, to create metadata including information regarding the user effects for the selected content, and to store the metadata associated with the e-book in the storage input,
wherein the controller detects an input for playing back the user effects via the input unit, and plays back the user effects according to at least one of the output order of the content, structural information of the e-book, the order of user effects added to the item of content, and the output order of the user effects.

8. The system of claim 7, wherein the user effects comprise at least one of a media file playback effect, a display of images effect, a 3-dimension display effect, a text, a handwriting comment, and a highlight display effect.

9. The system of claim 7, wherein the controller receives one or more content to be added to the e-book for the user effects via the input unit, extracts information regarding the user effects that includes information regarding the one or more content to be added to the e-book, creates the metadata based on the information regarding the user effects, and stores the one or more content to be added to the e-book and the metadata in the storage input.

10. The system of claim 7, wherein the controller controls the input unit to receive the playback order of the user effects, and arranges the metadata for the user effects according to the playback order of the user effects.

11. The system of claim 10, wherein the controller detects an input for playing back user effects via the input unit, and plays back the user effects, in order, based on the metadata arranged according to the playback order of the user effects.

12. The system of claim 10, wherein the input for playing back user effects is executed by a touch action or a proximity action to the item of content.

13. A method for creating an e-book, the method comprising:
receiving, if an input is detected to select at least one content in the e-book, one or more user effects for the selected content;
receiving a playback order of the user effects;
creating metadata including information regarding the user effects for the selected content;
arranging the metadata for the user effects according to the playback order of user effects; and
storing the metadata associated with the e-book.

14. The method of claim 13, further comprising:
playing back, if an input for playing back user effects is detected, the user effects, in order, based on the metadata arranged according to the playback order of the user effects.

15. The method of claim 13, wherein the user effects comprise at least one of a media file playback effect, an images display effect, a 3-dimension display effect, a text, a handwriting comment, and a highlight display effect.
